# EUROPEAN PATENT SPECIFICATION

(11) **EP 3 962 150 B1**
(45) Date of publication and mention of the grant of the patent: **22.11.2023**
(21) Application number: 20801534.7
(22) Date of filing: 17.04.2020
(51) Int. Cl.: H04W 24/04, H04B 17/29, H04B 17/318, H04B 17/345, H04W 74/08, H04W 74/00

(54) **METHOD FOR SOLVING WIFI CHANNEL INTERFERENCE AND RELATED PRODUCT**
VERFAHREN ZUR LÖSUNG VON WIFI-KANALSTÖRUNGEN UND ENTSPRECHENDES PRODUKT
PROCÉDÉ PERMETTANT DE RÉSOUDRE UN PROBLÈME D'INTERFÉRENCE DE CANAL WIFI ET PRODUIT ASSOCIÉ

(30) Priority: 06.05.2019 CN 201910372149
(43) Date of publication of application: 02.03.2022
(73) Proprietor: GUANGDONG OPPO MOBILE TELECOMMUNICATIONS CORP., LTD., Dongguan, Guangdong 523860 (CN)
(72) Inventor: LIN, Jinquan, Dongguan, Guangdong 523860 (CN)
(74) Representative: Taor, Simon Edward William
(86) International application number: PCT/CN2020/085385
(87) International publication number: WO 2020/224418

(56) References cited:
- EP-A1- 2 996 425
- WO-A1-2016/156768
- CN-A- 106 688 285
- CN-A- 109 560 884
- CN-A- 110 062 405
- US-A1- 2017 332 405
- US-A1- 2018 063 796
- US-A1- 2018 270 038

## Description

### TECHNICAL FIELD

This disclosure relates to the technical field of wireless networks, and in particular to a wireless fidelity (WiFi) channel interference resolution method and related products.

### BACKGROUND

With electronic devices (such as mobile phones, tablet computers, and the like) being widely used, the electronic device can support more and more applications and becomes more and more powerful. The electronic device develops toward a direction of diversification and personalization, and becomes an indispensable electronic product in user's daily life.

With development of mobile Internet, more and more users use wireless fidelity (WiFi) networks for data transmission, resulting in a greater number of the electronic devices accessing the WiFi networks. Due to limitations of a working channel of WiFi, there will be multiple electronic devices working in a same or adjacent channel(s), and channel interference between the multiple electronic devices will cause serious damage to data transmission performance of the electronic devices..

A method for adjusting receiver sensitivity is disclosed in EP 2996425A1.

### SUMMARY

The present invention is defined in the independent claims. A wireless fidelity (WiFi) channel interference resolution method and related products are provided in implementations of the present disclosure, which can improve network performance of a first device and improve Internet experience of users in an environment with channel interference by adjusting a receiving sensitivity of the first device.

In a first aspect, a WiFi channel interference resolution method is provided according to claim 1.

In a third aspect, an electronic device is provided according to claim 9.

In a fourth aspect, a computer-readable storage medium is provided according to claim 10.

As can be seen that, the WiFi channel interference resolution method and the related products as described in implementations of the present disclosure are performed by the first device, the network parameters of the first device are obtained through the first device, the first receiving sensitivity value for the first device to receive the wireless network signal is determined according to the network parameters, and the receiving sensitivity for the first device to receive the wireless network signal is adjusted to the first receiving sensitivity value. As such, the network performance of the first device and the Internet experience of the users in an environment with channel interference can be improved, by adjusting the receiving sensitivity of the first device.

### BRIEF DESCRIPTION OF THE DRAWINGS

In order to describe technical solutions of implementations more clearly, the following will give a brief description of accompanying drawings used for describing the implementations. Apparently, accompanying drawings described below are merely some implementations. Those of ordinary skill in the art can also obtain other accompanying drawings based on the accompanying drawings described below without creative efforts.
FIG. 1A is a schematic diagram of a scene of an electronic device operating in a wireless fidelity (WiFi) network according to implementations.
FIG. 1B is a schematic diagram of a scene of an electronic device operating in the WiFi network according to other implementations.
FIG. 1C is a schematic flowchart of a WiFi channel interference resolution method according to implementations.
FIG. 1D is a schematic flowchart of a first device adjusting a receiving sensitivity according to implementations.
FIG. 2 is a schematic flowchart of a WiFi channel interference resolution method according to other implementations.
FIG. 3 is a schematic structural diagram of an electronic device according to implementations.
FIG. 4A is a block diagram illustrating functional units of a WiFi channel interference resolution apparatus according to implementations.
FIG. 4B is a block diagram illustrating functional units of a WiFi channel interference resolution apparatus according to other implementations.
FIG. 5 is a schematic structural diagram of an electronic device according to other implementations.

### DETAILED DESCRIPTION

In order for those skilled in the art to better understand technical solutions of implementations, technical solutions of implementations will be described clearly and completely with reference to accompanying drawings in the implementations. Apparently, implementations hereinafter described are merely some implementations, rather than all implementations, of present disclosure.

The terms "first", "second", and the like used in the specification, the claims, and the accompany drawings of the present disclosure are used to distinguish different objects rather than describe a particular order. In addition, the terms "include", "comprise", and "have" as well as variations thereof are intended to cover non-exclusive inclusion. For example, a process, method, system, product, or device including a series of steps or units is not limited to the listed steps or units. Instead, it can optionally include other steps or units that are not listed; alternatively, other steps or units inherent to the process, method, product, or device can also be included.

The term "implementation" referred to herein means that a particular feature, structure, or character described in conjunction with the implementation may be contained in at least one implementation of the present disclosure. The phrase appearing in various places in the specification does not necessarily refer to the same implementation, nor does it refer to an independent or alternative implementation that is mutually exclusive with other implementations. It is explicitly and implicitly understood by those skilled in the art that an implementation described herein may be combined with other implementations.

An electronic device referred to herein may include various handheld devices, in-vehicle devices, wearable devices, computing devices that have wireless communication functions or other processing devices connected with a wireless modem, as well as various forms of user equipments (UE), mobile stations (MS), terminal devices, and the like. For ease of description, the above-mentioned devices are collectively referred to as an electronic device.

Hereinafter, some terms will be illustrated to facilitate understanding of those skilled in the art.

Transmission coverage of a wireless network signal refers to a communication range where a transmission frame can be successfully received, and depends on transmission energy and a characteristic of radio wave transmission. Because a transmission signal will decay and is unable to be successfully received beyond a certain range, a receiver listens for the transmission signal and will not consider the transmission signal as a valid signal, and will not receive the transmission signal, and the certain range is the transmission coverage.

Listen coverage of the wireless network signal refers to a range where network signal transmission can be listened for, and depends on a sensitivity of the receiver and the characteristic of the radio wave transmission. The listen coverage is greater than the transmission coverage, because for a device, as long as the transmission signal can be listened for by the device, it is considered as in the listen coverage. However, even if the transmission signal is listened for, the transmission signal cannot be normally decoded.

A receiving sensitivity refers to a minimum threshold for a receiving end to receive the wireless network signal. The listen coverage mainly depends on the receiving sensitivity of the receiving end. The signal can be received on condition that signal energy of the signal at the receiving end is not less than a nominal receiving sensitivity. The receiving sensitivity is indicated by dBm. Generally, a nominal receiving sensitivity of the electronic device which is connected in a wireless fidelity (WiFi) network, refers to a sensitivity level with an error rate of 10⁻⁵ (99.999%) at each transmission rate. Nominal receiving sensitivities at different rates under different modulation modes are shown in a table below.

| modulation mode | OFDM | OFDM | OFDM | OFDM | CCK | CCK | DQPSK | DBPSK |
|---|---|---|---|---|---|---|---|---|
| transmission rate | 54Mb/s | 24Mb/s | 9Mb/s | 6Mb/s | 11Mb/s | 5.5Mb/s | 2Mb/s | 1Mb/s |
| receiving sensitivity | -65 | -79 | -81 | -82 | -83 | -87 | -91 | -94 |

The modulation modes include an orthogonal frequency division multiplexing (OFDM) modulation, a complementary code keying (CCK) modulation, a differential quadrature reference phase shift keying (DQPSK) modulation, and a differentially coherent binary phase shift keying (DBPSK) modulation.

A clear channel assessment (CCA) is mainly used for two purposes: whether the signal can start to be received and whether a present channel is clear and can transmit data. A CCA detection method is not limited, and a simple and commonly used CCA detection method is to determine whether a channel is clear according to a magnitude of the signal energy.

Hereinafter, detailed description of implementations of the present disclosure will be given below.

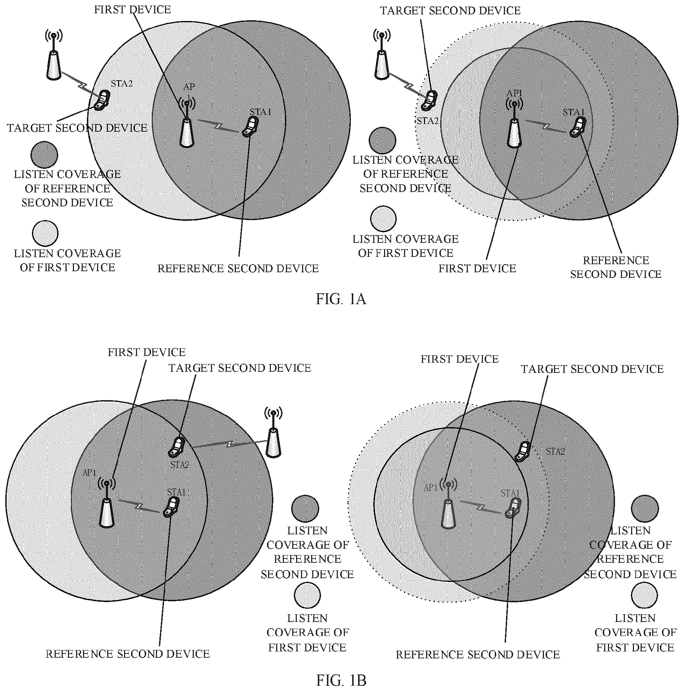

FIG. 1A and FIG. 1B are schematic diagrams of scenes of the electronic device operating in the WiFi network according to implementations. As illustrated in FIG. 1A and FIG. 1B, a first device is connected with multiple second devices. The first device is a wireless access point (AP) device in the wireless network. The first device AP1 may be a router, and may also be an electronic device such as a mobile phone, a notebook computer, a palmtop, and the like. The second device is a network device for data transmission with the first device. The second device may be an electronic device such as a mobile phone, a notebook computer, a palmtop, and the like.

As illustrated in FIG. 1A, a target second device STA2 is within the listen coverage of the first device AP1. When the target second device STA2 transmits data in a base station subsystem (BSS) module network, if the first device AP 1 listens for the target second device STA2, and the first device AP 1 is forbidden to transmit data to a reference second device STA1. Because the listen coverage is greater than the transmission coverage, the data transmission from the first device AP 1 to the reference second device STA1 will not collide with an air packet of the target second device STA2. After the listen coverage of the first device AP 1 is narrowed, because the target second device STA2 is not within the listen coverage of the first device AP 1 or the listen coverage of the reference second device STA1, data transmission between the first device AP1 and the reference second device STA1 will not be affected by the target second device STA2.

As illustrated in FIG. 1B, the target second device STA2 is within the listen coverage of the first device AP1 and the listen coverage of the reference second device STA 1 simultaneously. Due to competition, after the listen coverage of the first device AP1 is narrowed, the target second device STA2 is not within the listen coverage of the first device AP 1, but within the listen coverage of the reference second device STA1. In this case, the reference second device STA1 can be determined to be a hidden wireless access point, and when the first device AP 1 and the target second device STA2 transmitting packets simultaneously, collision will occur more likely. When the target second device STA2 transmit packets in its BBS module network, the first device AP1 will not receive a clear-to-send (CTS) response from the second device STA1in response to a request-to-send (RTS) protection frame, a transmission success rate of the RTS RTS_PER will decrease, and therefore at this time, the listen coverage of the first device AP 1 needs to be further increased.

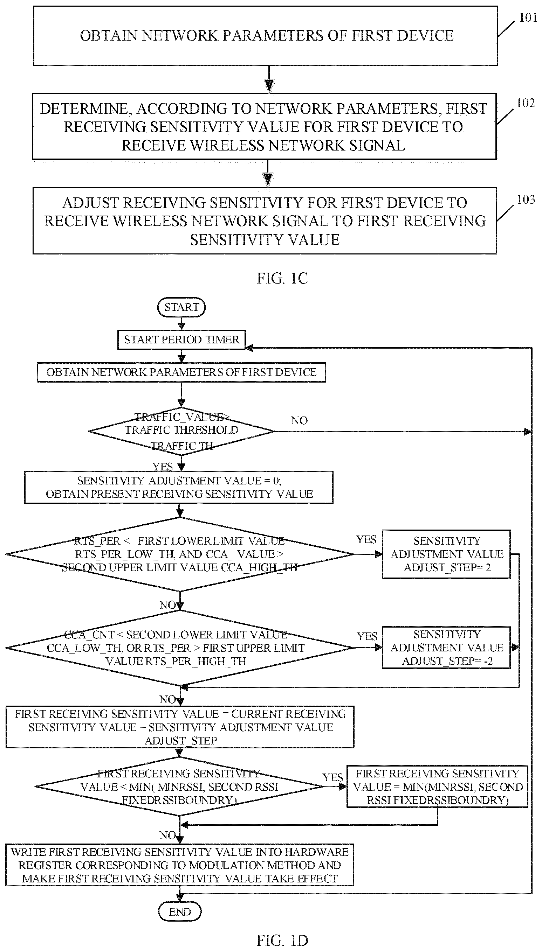

FIG. 1C is a schematic flowchart of the WiFi channel interference resolution method performed by the first device according to implementations. As illustrated in FIG. 1C, the method includes the following.

101, network parameters of the first device are obtained.

The first device is the AP device in the wireless network.

The network parameters include a transmission success rate of RTS protection frame RTS_PER of the first device, a CCA value CCA_Cnt, a traffic value Traffic_Value of the BBS module network in which the first device is located, and a minimum first received signal strength indication MinRssi (RSSI) among multiple RSSIs corresponding to the multiple second devices which are currently connected with the first device.

As an implementation, the network parameters of the first device can be obtained according to a time period, which may be, for example, 1 second, 0.5 second, and so on.

102, a first receiving sensitivity value for the first device to receive the wireless network signal is determined according to the network parameters.

As an implementation, whether there exists a hidden wireless access point (abbreviated to "hidden point") in a present network environment can be determined according to the transmission success rate of RTS protection frame RTS_PER of the first device. Reference can be made to FIG. 1B, there exists the reference second device STA1, and the target second device STA2 is not within the listen coverage of the first device AP 1, but within the listen coverage of the reference second device STA1. As an implementation, when the hidden point exists, the hidden point usually occupies the channel, the transmission success rate of RTS protection frame RTS_PER of the first device when transmitting data will increase. Whether the present channel is busy can be determined according to the CCA value CCA_Cnt. A traffic condition of the BSS module network in which the first device is located can be determined according to the traffic value Traffic_Value. Furthermore, the first receiving sensitivity value can be determined according to whether the hidden point affects the data transmission of the first device and whether the present channel is busy.

As an implementation, at 102, the first receiving sensitivity value for the first device to receive a wireless network signal is determined according to the network parameters as follows.

21, in response to the traffic value Traffic_Value being greater than a traffic threshold, whether the transmission success rate of RTS protection frame RTS_PER is within a range of success rates is determined, and whether the CCA value CCA_Cnt is within a range of assessment values is determined.

The traffic value Traffic_Value being greater than the traffic threshold indicates that the first device is in a state of the data transmission and the receiving sensitivity can be adjusted. When the traffic value Traffic_Value is not greater than the traffic threshold, the network parameters of the first device will continue to be obtained according to the time period until the traffic value Traffic_Value is greater than the traffic threshold.

When the transmission success rate of RTS protection frame RTS_PER is within the range of success rates and the CCA value CCA_Cnt is within the range of assessment values, whether the receiving sensitivity needs to be enlarged or reduced can be further determined. Specifically, a corresponding success rate threshold can be set for the transmission success rate of RTS protection frame RTS_PER in advance, and a corresponding threshold is set for the CCA value CCA_Cnt. After the network parameters are obtained according to the time period each time, a range to which the network parameters belong can be determined, and the receiving sensitivity can be adjusted in real time.

22, in response to the transmission success rate of RTS protection frame RTS_PER being within the range of success rates and the CCA value CCA_Cnt being within the range of assessment values, a sensitivity adjustment value adjust_Step corresponding to the range of success rates and the range of assessment values is determined.

As an implementation, the transmission success rate of RTS protection frame RTS_PER corresponds to a first upper limit value RTS_PER_HIGH_TH and a first lower limit value RTS_PER_LOW_TH, and the CCA value CCA_Cnt corresponds to a second upper limit value CCA_HIGH_TH and a second lower limit value CCA_LOW_TH. The sensitivity adjustment value adjust_Step corresponding to the range of success rates and the range of assessment values is determined as follows.

A 1, in response to the transmission success rate of RTS protection frame RTS_PER being less than the first lower limit value RTS_PER_LOW_TH and the CCA value CCA_Cnt being greater than the second upper limit value CCA_HIGH_TH, that the sensitivity adjustment value adjust Step indicates increasing the present receiving sensitivity value by a target value is determined.

A2, in response to the transmission success rate of RTS protection frame RTS_PER being greater than the first lower limit value RTS_PER_LOW_TH or the CCA value CCA_Cnt being less than the second upper limit value CCA_HIGH_TH, that the sensitivity adjustment value adjust_Step indicates decreasing the present receiving sensitivity value by the target value is determined.

When the transmission success rate of RTS protection frame RTS_PER is less than the first lower limit value RTS_PER_LOW_TH, it indicates that there is no hidden point in the present network environment, that is, there is no reference second network device which is not within the listen coverage of the first device but within the listen coverage of the reference second device, or it indicates that the hidden node does not affect the data transmission of the first device. When the CCA value CCA_Cnt is greater than the second upper limit value CCA_HIGH_TH, it indicates that the present network environment is noisy and the channel is often occupied by other second devices. In this case, the receiving sensitivity can be increased. Specifically, that the sensitivity adjustment value adjust Step indicates increasing the present receiving sensitivity value by the target value is determined, and the target value may be, for example, 2dbm.

When the transmission success rate of RTS protection frame RTS_PER is greater than the first upper limit value RTS_PER_HIGH_TH, it can be determined that there exists the hidden point in the present network environment and the hidden point often accesses the channel for data transmission. When the CCA value CCA_Cnt is less than the second lower limit value CCA_LOW_TH, it indicates that the present network environment is relatively clean and there are more clear channels. In this case, the receiving sensitivity can be reduced. Specifically, that the sensitivity adjustment value adjust_Step indicates decreasing the present receiving sensitivity value by the target value is determined.

23, a present receiving sensitivity value for the first device to receive the wireless network signal is obtained.

As an implementation, after the receiving sensitivity is adjusted each time, the present receiving sensitivity value can be saved. When the receiving sensitivity is to be adjusted next time, the first receiving sensitivity value can be determined according to the present receiving sensitivity value and a determined sensitivity adjustment value adjust_Step.

24, the first receiving sensitivity value is determined according to the present receiving sensitivity value and the sensitivity adjustment value adjust Step.

Specifically, when the sensitivity adjustment value adjust Step indicates increasing the present receiving sensitivity value by the target value, the target value can be added to the present receiving sensitivity value, in other words, the first receiving sensitivity value = the present receiving sensitivity value + the target value. When the sensitivity adjustment value adjust_Step indicates decreasing the present receiving sensitivity value by the target value, the target value can be subtracted from the present receiving sensitivity value, in other words, the first receiving sensitivity value = the present receiving sensitivity value - the target value.

As an implementation, the method may further include the following.

B 1, multiple reference transmission success rates of RTS protection frame under multiple first transmission rates are obtained.

B2, a first target transmission rate, which is closest to a predetermined first transmission rate and greater than the predetermined first transmission rate, is determined in the multiple first transmission rates. A second target transmission rate, which is closest to a predetermined second transmission rate and less than the predetermined second transmission rate, is determined in the multiple first transmission rates, and the predetermined second transmission rate is less than the predetermined first transmission rate.

B3, a reference transmission success rate corresponding to the first target transmission rate is determined to be the first lower limit value RTS PER LOW TH and a reference transmission success rate corresponding to the second target transmission rate is determined to be the first upper limit value RTS PER HIGH TH.

B4, multiple reference CCA values under multiple second transmission rates are obtained.

B5, a third target transmission rate, which is closest to a predetermined third transmission rate and greater than the predetermined third transmission rate, is determined in the multiple second transmission rates. A fourth target transmission rate, which is closest to a predetermined fourth transmission rate and less than the predetermined fourth transmission rate, is determined in the multiple second transmission rates, and the fourth transmission rate is less than the third transmission rate.

B6, a CCA value corresponding to the third target transmission rate is determined to be the second lower limit value CCA_LOW_TH, and a CCA value corresponding to the fourth target transmission rate is determined to be the second upper limit value CCA_HIGH_TH.

In this implementation, the multiple reference transmission success rates of RTS protection frame under multiple different first transmission rates can be obtained. The multiple first transmission rates each corresponds to a reference transmission success rate. When the first transmission rate is greater than the predetermined first transmission rate, it indicates that there is no hidden point in the present network environment or the hidden point does not affect the data transmission of the first device. Therefore, the first target transmission rate, which is closest to a predetermined first transmission rate and greater than the predetermined first transmission rate, can be determined in the multiple first transmission rates, and the reference transmission success rate corresponding to the first target transmission rate is determined to be the first lower limit value RTS_PER_LOW_TH. When the first transmission rate is less than the predetermined second transmission rate, it indicates that there exists the hidden point in the present network environment and the hidden point often accesses the channel for the data transmission between the second device and the first device. Therefore, the second target transmission rate, which is closest to a predetermined second transmission rate and less than the predetermined second transmission rate, can be determined in the multiple first transmission rates, and the reference transmission success rate corresponding to the second target transmission rate is determined to be the first upper limit value RTS_PER_HIGH_TH.

In addition, in this implementation, the multiple reference CCA values under the multiple different second transmission rates can be obtained. The multiple second transmission rates each corresponds to a reference CCA value. When the second transmission rate is greater than a predetermined third transmission rate, it indicates that the present network environment is relatively clean and there are more clear channels. Therefore, the third target transmission rate, which is closest to the predetermined third transmission rate and greater than the predetermined third transmission rate, can be determined in the multiple second transmission rates, and the reference CCA value corresponding to the third target transmission rate is determined to be the second lower limit value CCA_LOW_TH. When the second transmission rate is less than a predetermined fourth transmission rate, it indicates that the present network environment is noisy and the channel is often occupied by other second devices. Therefore, the fourth target transmission rate, which is closest to a predetermined fourth transmission rate and less than the predetermined fourth transmission rate, can be determined in the multiple second transmission rates, and the reference CCA value corresponding to the fourth target transmission rate is determined to be the second upper limit value CCA_HIGH_TH.

The range of success rates can be set by obtaining the multiple reference transmission success rates of RTS protection frame corresponding to multiple different transmission rates. The range of assessment values can be set by obtaining the multiple CCA values corresponding to the multiple different transmission rates. Furthermore, a relationship between the transmission success rate of RTS protection frame RTS_PER and the range of success rates of the first device can be determined, and a relationship between the CCA value CCA_Cnt and the range of assessment values can be determined. Moreover, the receiving sensitivity of the first device can be adjusted.

103, a receiving sensitivity for the first device to receive the wireless network signal is adjusted to the first receiving sensitivity value.

As an implementation, after the first device determines the first receiving sensitivity value, the receiving sensitivity for the first device to receive the wireless network signal is adjusted to the first receiving sensitivity value. As such, the network performance of the first device and the Internet experience of the users in an environment with channel interference can be improved.

As an implementation, at 103, a receiving sensitivity for the first device to receive the wireless network signal is adjusted to the first receiving sensitivity value as follows.

31, a present modulation mode of the wireless network signal of the first device is determined.

32, the first receiving sensitivity value is written into a hardware register corresponding to the modulation mode and is made effective.

As illustrated in the table, the first device can operate in different modulation modes and can operate in multiple modulation modes simultaneously. Therefore, as an implementation, the present modulation mode of the first device can be determined, and then the first receiving sensitivity value is written into the hardware register corresponding to the modulation mode and is made effective, so as to achieve adjustment of the receiving sensitivity.

As an implementation, the network parameters further include the minimum first RSSI MinRssi among multiple RSSIs corresponding to the multiple second devices which are currently connected with the first device, and the method further includes the following.

After the first receiving sensitivity value for the first device to receive the wireless network signal is determined according to the network parameters, when the first receiving sensitivity value is not less than the minimum first RSSI MinRssi and the first receiving sensitivity value is not less than a second RSSI FixedRssiBoundary, the second RSSI FixedRssiBoundary is a minimum RSSI that the first device can listen for, the first receiving sensitivity value is updated to a smaller one of the minimum first RSSI MinRssi and the second RSSI FixedRssiBoundary.

When the first device adjusts the receiving sensitivity, it needs to be ensured that the first device can listen for all the second devices which are connected with the first device. Therefore, it needs to be ensured that an adjusted receiving sensitivity value is less than the minimum first RSSI MinRssi among the multiple RSSIs corresponding to the multiple second devices which are currently connected with the first device. In addition, in order to ensure that the first device can be connected by the second device, the listen coverage of the first device is unable to be narrowed without limitation, and it needs to be ensured that the adjusted receiving sensitivity value is less than the second RSSI FixedRssiBoundary that the first device can listen for. Therefore, after the first receiving sensitivity value for the first device to receive the wireless network signal is determined according to the network parameters, the first device can compare the first receiving sensitivity value with the first RSSI and the second RSSI FixedRssiBoundary respectively. When the first receiving sensitivity value is not less than the minimum first RSSI MinRssi and the first receiving sensitivity value is not less than the second RSSI FixedRssiBoundary, the second RSSI FixedRssiBoundary is the minimum RSSI that the first device can listen for, the first receiving sensitivity value is updated to the smaller one of the minimum first RSSI MinRssi and the second RSSI FixedRssiBoundary, so as to obtain a new first receiving sensitivity value. Then the receiving sensitivity for the first device to receive the wireless network signal is adjusted to the updated first receiving sensitivity value. As such, the channel interference can be avoided and the network performance can be improved, while ensuring that the first device listen for all connected second devices.

FIG. 1D is a schematic flowchart of the first device adjusting the receiving sensitivity according to implementations. As illustrated in FIG. 1D, a period timer is started, and the network parameters of the first device are obtained in the time period. When the traffic value Traffic_Value is greater than the traffic threshold, whether the transmission success rate of RTS protection frame RTS_PER is within the range of success rates and whether the CCA value CCA_Cnt is within the range of assessment values are further determined. When the traffic value Traffic_Value is not greater than the traffic threshold, the network parameters can continue to be obtained in the time period. When the transmission success rate of RTS protection frame RTS_PER is less than the first lower limit value RTS_PER_LOW_TH and the CCA value CCA_Cnt is greater than the second upper limit value CCA_HIGH_TH, that the sensitivity adjustment value adjust_Step indicates increasing the present receiving sensitivity value by the target value such as 2dbm is determined. When the transmission success rate of RTS protection frame RTS_PER is greater than the first upper limit value RTS_PER_HIGH_TH or the CCA value CCA_Cnt is less than the second lower limit value CCA_LOW_TH, that the sensitivity adjustment value adjust Step indicates decreasing the present receiving sensitivity value by the target value such as -2dbm is determined. Then the first receiving sensitivity value is determined according to the present receiving sensitivity value and the sensitivity adjustment value adjust Step. When the first receiving sensitivity value is not less than the minimum first RSSI MinRssi and the first receiving sensitivity value is not less than the second RSSI FixedRssiBoundary, the second RSSI FixedRssiBoundary is the minimum RSSI that the first device can listen for, the first receiving sensitivity value is updated to the smaller one of the minimum first RSSI MinRssi and the second RSSI FixedRssiBoundary, so as to obtain the new first receiving sensitivity value. Finally, the first receiving sensitivity value is written into the hardware register corresponding to the modulation mode and is made effective.

As can be seen that, the WiFi channel interference resolution method as described in the present disclosure is performed by the first device, the network parameters of the first device are obtained through the first device, the first receiving sensitivity value for the first device to receive the wireless network signal is determined according to the network parameters, and the receiving sensitivity for the first device to receive the wireless network signal is adjusted to the first receiving sensitivity value. As such, the network performance of the first device and the Internet experience of the users in the environment with channel interference can be improved, by adjusting the receiving sensitivity of the first device.

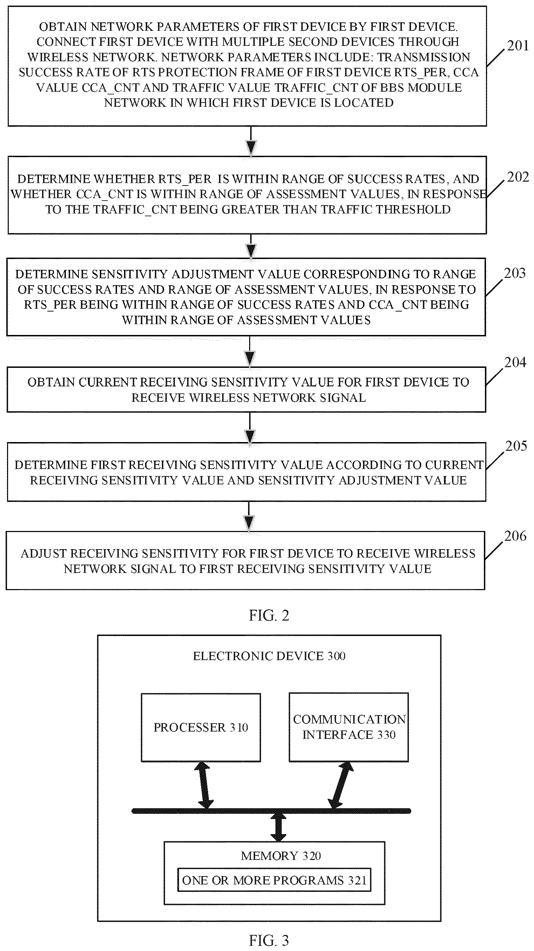

Similar to implementations illustrated in FIG. 1C, FIG. 2 is a schematic flowchart of the WiFi channel interference resolution method according to other implementations. As illustrated in FIG. 2, the method includes the following.

201, the first device obtains network parameters of the first device. The first device is connected with more second devices through a wireless network. The network parameters include the transmission success rate of RTS protection frame RTS_PER of the first device, the CCA value CCA_Cnt, and the traffic value Traffic_Value of the BSS module network in which the first device is located.

202, whether the transmission success rate of RTS protection frame RTS_PER is within a range of success rates and whether the CCA value CCA_Cnt is within a range of assessment values are determined, in response to the traffic value Traffic_Value being greater than the traffic threshold.

203, the sensitivity adjustment value adjust_Step corresponding to the range of success rates and the range of assessment values is determined, in response to the transmission success rate of RTS protection frame RTS_PER being within the range of success rates and the CCA value CCA_Cnt being within the range of assessment values.

204, the present receiving sensitivity value for the first device to receive the wireless network signal is obtained.

205, the first receiving sensitivity value is determined according to the present receiving sensitivity value and the sensitivity adjustment value adjust Step.

206, the receiving sensitivity for the first device to receive the wireless network signal is adjusted to the first receiving sensitivity value.

For specific descriptions of operations at 201 to 206, reference can be made to descriptions of corresponding operations of the WiFi channel interference resolution method as illustrated in FIG. 1C, which will not be repeated here.

As can be seen that the WiFi channel interference resolution method as described in the present disclosure is performed by the first device. The network parameters of the first device are obtained through the first device. When the traffic value Traffic_Value is greater than the traffic threshold, whether the transmission success rate of RTS protection frame RTS_PER is within the range of success rates and whether the CCA value CCA_Cnt is within the range of assessment values are determined. When the transmission success rate of RTS protection frame RTS_PER is within the range of success rates and the CCA value CCA_Cnt is within the range of assessment values, the sensitivity adjustment value adjust_Step corresponding to the range of success rates and the range of assessment values is determined, and the present receiving sensitivity value for the first device to receive the wireless network signal is obtained. The first receiving sensitivity value is determined according to the present receiving sensitivity value and the sensitivity adjustment value adjust_Step. The receiving sensitivity for the first device to receive the wireless network signal is adjusted to the first receiving sensitivity value. As such, the first receiving sensitivity value of the first device is determined according to the network parameters of the first device. Furthermore, the network performance for the first device and Internet experience of users in an environment with channel interference can be improved by adjusting the receiving sensitivity of the first device flexibly.

Similar to implementations illustrated in FIG. 1C and FIG. 2, FIG. 3 is a schematic structural diagram of the electronic device according to implementations. As illustrated in FIG. 3, the electronic device 300 includes a processor 310, a memory 320, a communication interface 330, and one or more programs 321. The one or more programs 321 are stored in the memory 320 and are configured to be executed by the processor 310. The one or more programs 321 includes instructions for performing the following methods.

The network parameters of the first device are obtained. The first receiving sensitivity value for the first device to receive a wireless network signal is determined according to the network parameters. The receiving sensitivity for the first device to receive the wireless network signal is adjusted to the first receiving sensitivity value.

As an implementation, the first device is connected with the multiple second devices through the wireless network. The network parameters include the transmission success rate of RTS protection frame RTS_PER of the first device, the CCA value CCA_Cnt, and the traffic value Traffic_Value of the BSS module network in which the first device is located. In terms of determining the first receiving sensitivity value for the first device to receive the wireless network signal according to the network parameters, the one or more programs 321 include the instructions for performing the following methods.

When the traffic value Traffic_Value is greater than the traffic threshold, whether the transmission success rate of RTS protection frame RTS_PER is within the range of success rates and whether the CCA value CCA_Cnt is within the range of assessment values are determined. When the transmission success rate of RTS protection frame RTS_PER is within the range of success rates and the CCA value CCA_Cnt is within the range of assessment values, the sensitivity adjustment value adjust_Step corresponding to the range of success rates and the range of assessment values is determined. The present receiving sensitivity value for the first device to receive the wireless network signal is obtained. The first receiving sensitivity value is determined according to the present receiving sensitivity value and the sensitivity adjustment value adjust_Step.

As an implementation, the transmission success rate of RTS protection frame RTS_PER corresponds to the first upper limit value RTS_PER_HIGH_TH and the first lower limit value RTS_PER_LOW_TH, and the CCA value CCA_Cnt corresponds to the second upper limit value CCA_HIGH_TH and the second lower limit value CCA_LOW_TH. In terms of determining the sensitivity adjustment value adjust_Step corresponding to the range of success rates and the range of assessment values, the one or more programs 321 include the instructions for performing the following methods.

When the transmission success rate of RTS protection frame RTS_PER is less than the first lower limit value RTS_PER_LOW_TH and the CCA value CCA_Cnt is greater than the second upper limit value CCA_HIGH_TH, that the sensitivity adjustment value adjust_Step indicates increasing the present receiving sensitivity value by the target value is determined. When the transmission success rate of RTS protection frame RTS_PER is greater than the first lower limit value RTS_PER_LOW_TH or the CCA value CCA_Cnt is less than the second upper limit value CCA_HIGH_TH, that the sensitivity adjustment value adjust Step indicates decreasing the present receiving sensitivity value by the target value is determined.

As an implementation, the network parameters further include the minimum first RSSI MinRssi among the multiple RSSIs corresponding to the multiple second devices which are currently connected with the first device. The one or more programs 321 includes the instructions for performing the following methods.

After the first receiving sensitivity value for the first device to receive the wireless network signal is determined according to the network parameters, when the first receiving sensitivity value is not less than the minimum first RSSI MinRssi and the first receiving sensitivity value is not less than the second RSSI FixedRssiBoundary, the second RSSI FixedRssiBoundary is the minimum RSSI that the first device can listen for, the first receiving sensitivity value is updated to the smaller one of the minimum first RSSI MinRssi and the second RSSI FixedRssiBoundary.

As an implementation, in terms of adjusting the receiving sensitivity for the first device to receive the wireless network signal to the first receiving sensitivity value, the one or more programs 321 include the instructions for performing the following methods.

The present modulation mode of the wireless network signal of the first device is determined. The first receiving sensitivity value is written into the hardware register corresponding to the modulation mode and is made effective.

The foregoing solution of the implementations of the present disclosure is mainly described from the viewpoint of execution process of the method. It can be understood that, in order to implement the above functions, the electronic device includes hardware structures and/or software modules corresponding to the respective functions. Those skilled in the art should readily recognize that, in combination with units and method steps described in the implementations disclosed herein, the present disclosure can be implemented in hardware or a combination of the hardware and computer software. Whether a function is implemented by way of the hardware or hardware driven by the computer software depends on the particular application and design constraints of the technical solution. Those skilled in the art may use different methods to implement the described functions for each particular application, but such implementations should not be considered as beyond the scope of the present disclosure.

According to the implementations of the present disclosure, functional units may be divided for the electronic device in accordance with the foregoing method examples. For example, each functional unit may be divided according to each function, and two or more functions may be integrated in one processing unit. The above-mentioned integrated unit can be implemented in the form of hardware or software functional units. It should be noted that the division of units in the implementations is schematic, and is merely a logical function division, and there may be other division manners in actual implementation.

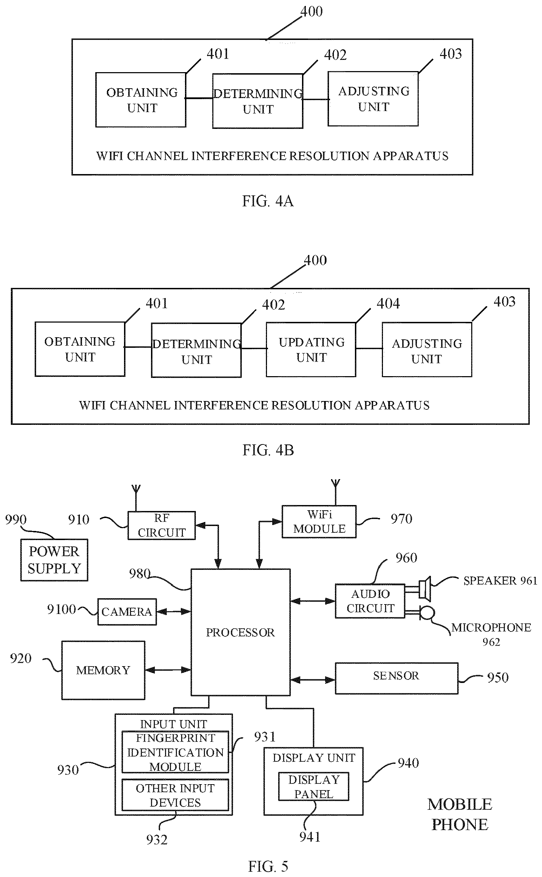

FIG. 4A is a block diagram illustrating functional units of a functional unit of a WiFi channel interference resolution apparatus 400 according to implementations. The WiFi channel interference resolution apparatus 400 is performed by the first device and includes an obtaining unit 401, a determining unit 402, and an adjusting unit 403. The obtaining unit 401 is configured to obtain network parameters of the first device. The determining unit 402 is configured to determine, according to the network parameters, the first receiving sensitivity value for the first device to receive the wireless network signal. The adjusting unit 403 is configured to adjust a receiving sensitivity for the first device to receive the wireless network signal to the first receiving sensitivity value.

As an implementation, the first device is connected with the multiple second devices through the wireless network. The network parameters include the transmission success rate of RTS protection frame RTS_PER of the first device, the CCA value CCA_Cnt, and the traffic value Traffic_Value of the BSS module network in which the first device is located. In terms of determining the first receiving sensitivity value for the first device to receive the wireless network signal according to the network parameters, the determining unit 402 is configured to determine whether the transmission success rate of RTS protection frame RTS_PER is within the range of success rates, and determine whether the CCA value CCA_Cnt is within a range of assessment values, when the traffic value Traffic_Value is greater than the traffic threshold; determine the sensitivity adjustment value adjust_Step corresponding to the range of success rates and the range of assessment values, when the transmission success rate of RTS protection frame RTS_PER is within the range of success rates and the CCA value CCA_Cnt is within the range of assessment values; obtain the present receiving sensitivity value for the first device to receive the wireless network signal; determine the first receiving sensitivity value according to the present receiving sensitivity value and the sensitivity adjustment value adjust_Step.

As an implementation, the transmission success rate of RTS protection frame RTS_PER corresponds to the first upper limit value RTS_PER_HIGH_TH and the first lower limit value RTS_PER_LOW_TH, and the CCA value CCA_Cnt corresponds to the second upper limit value CCA_HIGH_TH and the second lower limit value CCA_LOW_TH. In terms of determining the sensitivity adjustment value adjust_Step corresponding to the range of success rates and the range of assessment values, the determining unit 402 is configured to determine that the sensitivity adjustment value adjust_Step indicates increasing the present receiving sensitivity by the target value, when the transmission success rate of RTS protection frame RTS_PER is less than the first lower limit value RTS_PER_LOW_TH and the CCA value CCA_Cnt is greater than the second upper limit value CCA_HIGH_TH, and determine that the sensitivity adjustment value adjust_Step indicates decreasing the present receiving sensitivity value by the target value, when the transmission success rate of RTS protection frame RTS_PER is greater than the first upper limit value RTS_PER_HIGH_TH or the CCA value CCA_Cnt is less than the second lower limit value CCA_LOW_TH.

As an implementation, FIG. 4B is a block diagram illustrating functional units of the WiFi channel interference resolution apparatus in FIG. 4A according to other implementations. As illustrated in FIG. 4B, the network parameters further include the minimum first RSSI MinRssi among the multiple RSSIs corresponding to the multiple second devices which are currently connected with the first device. FIG. 4B further includes an updating unit 404, compared with FIG. 4A. The updating unit 404 is configured to update the first receiving sensitivity value to the smaller one of the minimum first RSSI MinRssi and the second RSSI FixedRssiBoundary, when the first receiving sensitivity value is not less than the minimum first RSSI MinRssi and the first receiving sensitivity value is not less than the second RSSI FixedRssiBoundary, the second RSSI FixedRssiBoundary is the minimum RSSI that the first device can listen for, after the determining unit 402 determines, according to the network parameters, the first receiving sensitivity value for the first device to receive the wireless network signal.

As an implementation, the obtaining unit 401 is further configured to obtain the multiple reference transmission success rates of RTS protection frame under the multiple first transmission rates.

The determining unit 402 is further configured to determine the first target transmission rate which is closest to the predetermined first transmission rate and greater than the predetermined first transmission rate in the multiple first transmission rates; determine the second target transmission rate which is closest to the predetermined second transmission rate and less than the predetermined second transmission rate in the multiple first transmission rates, and the second transmission rate is less than the first transmission rate; determine the reference transmission success rate corresponding to the first target transmission rate to be the first lower limit value RTS_PER_LOW_TH and determine the reference transmission success rate corresponding to the second target transmission rate to be the first upper limit value RTS_PER_HIGH_TH.

The obtaining unit 401 is further configured to obtain the multiple reference CCA values under the multiple second transmission rates.

The determining unit 402 is further configured to determine the third target transmission rate which is closest to the predetermined third transmission rate and greater than the predetermined third transmission rate in the multiple second transmission rates; determine the fourth target transmission rate which is closest to the predetermined fourth transmission rate and less than the predetermined fourth transmission rate in the multiple second transmission rates, and the fourth transmission rate is less than the third transmission rate; determine the CCA value corresponding to the third target transmission rate to be the second upper limit value CCA_HIGH_TH, and determine the CCA value corresponding to the fourth target transmission rate to be the second upper limit value CCA_HIGH_TH.

As an implementation, in terms of adjusting the receiving sensitivity for the first device to receive the wireless network signal to the first receiving sensitivity value, the adjusting unit 403 is configured to determine the present modulation mode of the wireless network signal of the first device and write the first receiving sensitivity value into the hardware register corresponding to the modulation mode and make the first receiving sensitivity value effective.

As an implementation, the network parameters further include the minimum first RSSI MinRssi among the multiple RSSIs corresponding to the multiple second devices which are currently connected with the first device. The updating unit 404 is further configured to update the first receiving sensitivity value to the smaller one of the minimum first RSSI MinRssi and the second RSSI FixedRssiBoundary, when the first receiving sensitivity value is not less than the minimum first RSSI MinRssi and the first receiving sensitivity value is not less than the second RSSI FixedRssiBoundary, the second RSSI FixedRssiBoundary is the minimum RSSI that the first device can listen for, after the determining unit 402 determines, according to the network parameters, the first receiving sensitivity value for the first device to receive the wireless network signal.

As can be seen that, the WiFi channel interference resolution apparatus as described in the present disclosure is performed by the first device. The network parameters of the first device are obtained through the first device. The first receiving sensitivity value for the first device to receive a wireless network signal is determined according to the network parameters. The receiving sensitivity for the first device to receive the wireless network signal is adjusted to the first receiving sensitivity value. As such, the network performance of the first device and the Internet experience of the users in an environment with channel interference can be improved, by adjusting the receiving sensitivity of the first device.

Implementations of the present disclosure also provide another electronic device. For ease of description, only parts related to implementations of the present disclosure are described and for specific technical details that are not described, reference can be made to method implementations of the present disclosure. As illustrated in FIG. 5, the electronic device can include a mobile phone, a tablet computer, a personal digital assistant (PDA), a point of sales (POS), an in-vehicle computer, and other terminal devices. A mobile phone will be taken as an example of the electronic device in the following.

FIG. 5 is a schematic structural diagram of a part of structures of the mobile phone that is related to the electronic device provided in implementations. As illustrated in FIG. 5, the mobile phone includes: a radio frequency (RF) circuit 910, a memory 920, an input unit 930, a display unit 940, a sensor 950, an audio circuit 960, a WiFi module 970, a processor 980, a power supply 990, and other elements. It will be appreciated by those skilled in the art that the present disclosure is not limited by the mobile phone as illustrated in FIG. 5. More or fewer elements than that as illustrated in FIG. 5 can be included, some elements may be or combined, or elements can be arranged differently.

Hereinafter, detailed description of each element of the mobile phone will be given below with reference of FIG. 5.

The RF circuit 910 can be configured to receive and transmit information. Generally, the RF circuit 910 includes but is not limited to an antenna, at least one amplifier, a transceiver, a coupler, a low noise amplifier (LNA), a duplexer, and the like. Furthermore, the RF circuit 910 may also be configured to communicate with a network and other devices via wireless communication. The above wireless communication may use any communication standard or protocol, which includes but is not limited to global system of mobile communication (GSM), general packet radio service (GPRS), code division multiple access (CDMA), wideband code division multiple access (WCDMA), long term evolution (LTE), E-mail, short messaging service (SMS), and so on.

The memory 920 is configured to store software programs and modules. The processor 980 is configured to execute various function applications and data processing of the mobile phone by running the software programs and the modules stored in the memory 920. The memory 920 can mainly include a program storage area and a data storage area. The program storage area can store an operating system, at least one application required by function, and so on. The data storage area can store data created according to use of the mobile phone, and so on. In addition, the memory 920 can include a high-speed random access memory (RAM), and can further include a non-volatile memory such as at least a disk storage device, a flash device, or other non-volatile solid storage devices.

The input unit 930 is configured to receive input digital or character information and to generate key signal input associated with user setting and functional control of the mobile phone. Specifically, the input unit 930 may include a fingerprint identification module 931 and other input devices 932. The fingerprint identification module 931 is configured to collect use's fingerprint data thereon. The input unit 930 can further include other input devices 932 in addition to the fingerprint identification module 931. Specifically, the other input devices 932 can include, but are not limited to, one or more of a touch screen, a physical keyboard, a functional key (such as a volume control key, a switch key, and so on), a track ball, a mouse, and an operating rod.

The display unit 940 is configured to display information input by the user, information provided for the user, or various menus of the mobile phone. The display unit 940 can include a display panel 941. As an implementation, the display panel 941 may be configured in the form of a liquid crystal display (LCD), an organic or inorganic light-emitting diode, and so on.

The mobile phone may also include at least one sensor 950, such as a light sensor, a motion sensor, a pressure sensor, a temperature sensor, and other sensors. Specifically, the light sensor may include an ambient light sensor (or a light ray sensor) and a proximity sensor. The ambient light sensor can be configured to adjust the brightness of the mobile phone's backlight according to ambient lights, so as to adjust the brightness of the display panel 941. The proximity sensor can be configured to turn off the display panel 941 and/or backlight when the mobile phone reaches nearby the ear. As one kind of motion sensor, an accelerometer sensor can be configured to detect the magnitude of acceleration in different directions (typically three axes) and the accelerometer sensor can also be configured to detect the magnitude and direction of gravity when mobile phone is stationary. The accelerometer sensor can also be configured to identify mobile-phone gestures related applications (such as vertical and horizontal screen switch, related games, magnetometer attitude calibration), and can be used for vibration-recognition related functions (such as a pedometer, or percussion), and so on. The mobile phone can also be equipped with other sensors such as a gyroscope, a barometer, a hygrometer, a thermometer, an infrared sensor, etc., which will not be repeated herein.

The audio circuit 960 may include m microphones, where m is a positive integer greater than 1. Audio data can be captured via microphones. The audio circuit 960, the speaker 961, and the microphone 962 can provide an audio interface between the user and the mobile phone. On one hand, the audio circuit 960 can be configured to convert received audio data into electrical signals and transfer the electrical signals to the speaker 961; the speaker 961 is configured to convert the electrical signals received into sound signals for output. On the other hand, the microphone 962 is configured to convert the received sound signals into electrical signals, which will be received and then converted into audio data by the audio circuit 960. The audio data is then transmitted to the processor 980 to be processed. The audio data processed by the processor 980 is transmitted to another mobile phone via an RF circuit 910 for example or is output to the memory 920 for further processing.

WiFi belongs to a short-range wireless transmission technology. With aid of the WiFi module 970, the mobile phone may assist the user in E-mail receiving and sending, webpage browsing, access to streaming media, and the like. WiFi provides users with wireless broadband Internet access. Although the WiFi module 970 is illustrated in FIG. 5, it is to be noted that the WiFi module 970 is not essential to the mobile phone and can be omitted according to actual needs without departing from the essential nature of the present disclosure.

The processor 980 is a control center of the mobile phone, and is configured to connect all parts of the whole mobile phone by utilizing various interfaces and lines, to run or execute the software programs and/or the modules stored in the memory 920, and to call data stored in the memory 920 to execute various functions and data processing of the mobile phone, so as to monitor the mobile phone as a whole. As an implementation, the processor 980 can include one or more processing units. As an implementation, the processor 980 may be integrated with an application processor and a modulation-demodulation processor. The application processor is mainly configured to process an operating system, a user interface, an application program, and the like, and the modulation-demodulation processor is mainly configured to process wireless communication. It can be noted that the modulation-demodulation processor may not be integrated into the processor 980.

The mobile phone also includes a power supply 990 (e.g., a battery) that supplies power to various elements. As an implementation, the power supply 990 may be logically connected with the processor 980 via a power management system to achieve management of charging, discharging, and power consumption through the power management system.

The mobile phone also includes a camera 9100, and the camera 9100 is configured to capture images and videos and transmit the images and videos captured to the processor 980 for processing.

Although not illustrated, the mobile phone may include a Bluetooth^{®} module, etc., and the present disclosure will not elaborate herein.

The methods of the foregoing implementations as illustrated in FIG. 1C and FIG. 2 can be implemented based on the structure of the mobile phone.

A computer storage medium is also provided in implementations of the present disclosure. The computer storage medium is configured to store programs which, when executed, are operable to execute some or all of the operations of any of the methods as described in the above-described method implementations. The computer includes the electronic device.

A computer program product is also provided in implementations of the present disclosure. The computer program product includes a non-transitory computer-readable storage medium that stores computer programs. The computer programs are operable with a computer to execute some or all operations of any of the methods as described in the above-described method implementations. The computer program product may be a software installation packet. The computer includes the electronic device.

It is to be noted that, for the sake of simplicity, the foregoing method implementations are described as a series of action combinations. However, it will be appreciated by those skilled in the art that the present disclosure is not limited by the sequence of actions described. According to the present disclosure, certain steps or operations may be performed in other order or simultaneously. Besides, it will be appreciated by those skilled in the art that the implementations described in the specification are exemplary implementations and the actions and modules involved are not necessarily essential to the present disclosure.

In the foregoing implementations, the description of each implementation has its own emphasis. For the parts not described in detail in an implementation, reference may be made to related descriptions in other implementations.

In the implementations of the present disclosure, it is to be noted that, the apparatus disclosed in implementations provided herein may be implemented in other manners. For example, the apparatus implementations described above are merely illustrative; for instance, the division of the unit is only a logical function division and there can be other manners of division during actual implementations; for example, multiple units or components may be combined or may be integrated into another system, or some features may be ignored, omitted, or not performed. In addition, coupling or direct coupling or communication connection between each illustrated or discussed component may be indirect coupling or communication connection via some interfaces, devices, or units, and may be electrical connection, or other forms of connection.

The units described as separate components may or may not be physically separated, and the components illustrated as units may or may not be physical units, that is, they may be in the same place or may be distributed to multiple network elements. All or part of the units may be selected according to actual needs to achieve the purpose of the technical solutions of the implementations.

In addition, the functional units in various implementations of the present disclosure may be integrated into one processing unit, or each unit may be physically present, or two or more units may be integrated into one unit. The above-mentioned integrated unit can be implemented in the form of hardware or a software function unit.

The integrated unit may be stored in a computer-readable memory when it is implemented in the form of a software functional unit and is sold or used as a separate product. Based on such understanding, the technical solutions of the present disclosure essentially, or the part of the technical solutions that contributes to the related art, or all or part of the technical solutions, may be embodied in the form of a software product which is stored in a memory and includes instructions for causing a computer device (which may be a personal computer, a server, or a network device, and so on) to perform all or part of the steps described in the various implementations of the present disclosure. The memory includes various medium capable of storing program codes, such as a USB (universal serial bus) flash disk, a read-only memory (ROM), a RAM, a removable hard disk, a disk, a compact disc (CD), or the like.

It will be noted by those of ordinary skill in the art that all or a part of the various methods of the implementations described above may be accomplished by means of a program to instruct associated hardware, where the program may be stored in a computer-readable memory, which may include a flash memory, a ROM, a RAM, a disk or a CD, and so on.

## Claims

1. A wireless fidelity, WiFi, channel interference resolution method, performed by a first device and comprising:
obtaining (101, 201) network parameters of the first device, wherein the first device is connected with a plurality of second devices through a wireless network, the network parameters comprise a transmission success rate of a request-to-send, RTS, protection frame RTS_PER of the first device, a clear channel assessment, CCA, value CCA_Cnt, and a traffic value Traffic_Value of a base station subsystem, BSS, module network in which the first device is located;
determining (102), according to the network parameters, a first receiving sensitivity value for the first device to receive a wireless network signal, which comprises:
determining (202) whether the transmission success rate of RTS protection frame RTS_PER is within a range of success rates, and whether the CCA value CCA_Cnt is within a range of assessment values, in response to the traffic value Traffic_Value being greater than a traffic threshold;
determining (203) a sensitivity adjustment value corresponding to the range of success rates and the range of assessment values, in response to the transmission success rate of RTS protection frame RTS_PER being within the range of success rates and the CCA value CCA_Cnt being within the range of assessment values;
obtaining (204) a present receiving sensitivity value for the first device to receive the wireless network signal; and
determining (205) the first receiving sensitivity value according to the present receiving sensitivity value and the sensitivity adjustment value; and
adjusting (103, 206) a receiving sensitivity for the first device to receive the wireless network signal to the first receiving sensitivity value.

2. The method of claim 1, wherein the transmission success rate of RTS protection frame RTS_PER corresponds to a first upper limit value and a first lower limit value, and the CCA value CCA_Cnt corresponds to a second upper limit value and a second lower limit value, wherein determining the sensitivity adjustment value corresponding to the range of success rates and the range of assessment values comprises:
determining that the sensitivity adjustment value indicates increasing the present receiving sensitivity value by a target value, in response to the transmission success rate of RTS protection frame RTS_PER being less than the first lower limit value and the CCA value CCA_Cnt being greater than the second upper limit value; and
determining that the sensitivity adjustment value indicates decreasing the present receiving sensitivity value by the target value, in response to the transmission success rate of RTS protection frame RTS_PER being greater than the first upper limit value or the CCA value CCA_Cnt being less than the second lower limit value.

3. The method of claim 1 or 2, wherein the network parameters further comprise a minimum first received signal strength indication, RSSI, MinRssi among a plurality of RSSIs corresponding to the plurality of second devices which are currently connected with the first device, and the method further comprises:
after determining, according to the network parameters, the first receiving sensitivity value for the first device to receive the wireless network signal,
updating the first receiving sensitivity value to a smaller one of the minimum first RSSI and a second RSSI, in response to the first receiving sensitivity value being not less than the minimum first RSSI and the first receiving sensitivity value being not less than the second RSSI, wherein the second RSSI is a minimum RSSI that the first device can listen for.

4. The method of claim 2, further comprising:
obtaining a plurality of reference transmission success rates of RTS protection frame under a plurality of first transmission rates;
determining, among the plurality of first transmission rates, a first target transmission rate which is closest to a predetermined first transmission rate and greater than the predetermined first transmission rate, and determining, among the plurality of first transmission rates, a second target transmission rate which is closest to a predetermined second transmission rate and less than the predetermined second transmission rate, wherein the predetermined second transmission rate is less than the predetermined first transmission rate;
determining a reference transmission success rate corresponding to the first target transmission rate to be the first lower limit value and determining a reference transmission success rate corresponding to the second target transmission rate to be the first upper limit value;
obtaining a plurality of reference CCA values under a plurality of second transmission rates;
determining, among the plurality of second transmission rates, a third target transmission rate which is closest to a predetermined third transmission rate and greater than the predetermined third transmission rate, and determining, among the plurality of second transmission rates, a fourth target transmission rate which is closest to a predetermined fourth transmission rate and less than the predetermined fourth transmission rate, wherein the predetermined fourth transmission rate is less than the predetermined third transmission rate; and
determining a CCA value corresponding to the third target transmission rate to be the second lower limit value, and determining a CCA value corresponding to the fourth target transmission rate to be the second upper limit value.

5. The method of claim 1 or 2, wherein adjusting the receiving sensitivity for the first device to receive the wireless network signal to the first receiving sensitivity value comprises:
determining a present modulation mode of the wireless network signal of the first device; and
writing the first receiving sensitivity value into a hardware register corresponding to the modulation mode and making the first receiving sensitivity value effective.

6. The method of claim 5, wherein the network parameters further comprise a minimum first RSSI MinRssi among a plurality of RSSIs corresponding to the plurality of second devices which are currently connected with the first device, and the method further comprises:
after determining, according to the network parameters, the first receiving sensitivity value for the first device to receive the wireless network signal,
updating the first receiving sensitivity value to a smaller one of the minimum first RSSI and a second RSSI, in response to the first receiving sensitivity value being not less than the minimum first RSSI and the first receiving sensitivity value being not less than the second RSSI, wherein the second RSSI is a minimum RSSI that the first device can listen for.

7. The method of claim 3, wherein adjusting the receiving sensitivity for the first device to receive the wireless network signal to the first receiving sensitivity value comprises:
determining a present modulation mode of the wireless network signal of the first device; and
writing the first receiving sensitivity value into a hardware register corresponding to the modulation mode and making the first receiving sensitivity value effective.

8. The method of claim 4, wherein adjusting the receiving sensitivity for the first device to receive the wireless network signal to the first receiving sensitivity value comprises:
determining a present modulation mode of the wireless network signal of the first device; and
writing the first receiving sensitivity value into a hardware register corresponding to the modulation mode and making the first receiving sensitivity value effective.

9. An electronic device, comprising a processor (310), a memory (320), a communication interface (330), and one or more programs (321), wherein the one or more programs are stored in the memory and are configured to be executed by the processor, and the one or more programs comprise instructions for performing the method of any of claims 1 to 8.

10. A computer-readable storage medium configured to store computer programs for electronic data interchange which, when executed, are operable with a computer to perform the method of any of claims 1 to 8.

## Patentansprüche

1. Wireless-Fidelity- bzw. WiFi-Kanalinterferenz-Auflösungsverfahren, durchgeführt durch eine erste Vorrichtung und umfassend:
Erlangen (101, 201) von Netzwerkparametern der ersten Vorrichtung, wobei die erste Vorrichtung mit einer Vielzahl von zweiten Vorrichtungen durch ein drahtloses Netzwerk verbunden ist, die Netzwerkparameter eine Übertragungserfolgsrate eines Sendeanforderungs- bzw. RTS-Schutzrahmens RTS_PER der ersten Vorrichtung, einen Kanalfreigabebewertungs- bzw. CCA-Wert CCA_ Cnt und einen Verkehrswert Traffic_Value eines Basisstationsteilsystem- bzw. BSS-Modulnetzwerks, in dem sich die erste Vorrichtung befindet, umfassen;
Bestimmen (102), gemäß den Netzwerkparametern, eines ersten Empfangsempfindlichkeitswerts für die erste Vorrichtung zum Empfangen eines Signals des drahtlosen Netzwerks, das umfasst:
Bestimmen (202), ob die Übertragungserfolgsrate von RTS-Schutzrahmen RTS_PER innerhalb eines Bereichs von Erfolgsraten ist und ob der CCA-Wert CCA_Cnt innerhalb eines Bereichs von Bewertungswerten ist, als Reaktion darauf, dass der Verkehrswert Traffic_Value größer als ein Verkehrsschwellenwert ist;
Bestimmen (203) eines Empfindlichkeitsanpassungswerts korrespondierend mit dem Bereich von Erfolgsraten und dem Bereich von Bewertungswerten als Reaktion darauf, dass die Übertragungserfolgsrate von RTS-Schutzrahmen RTS_PER innerhalb des Bereichs von Erfolgsraten ist und der CCA-Wert CCA_Cnt innerhalb des Bereichs von Bewertungswerten ist;
Erlangen (204) eines gegenwärtigen Empfangsempfindlichkeitswerts für die erste Vorrichtung zum Empfangen des Signals des drahtlosen Netzwerks; und
Bestimmen (205) des ersten Empfangsempfindlichkeitswerts gemäß dem gegenwärtigen Empfangsempfindlichkeitswert und dem Empfindlichkeitsanpassungswert; und
Anpassen (103, 206) einer Empfangsempfindlichkeit für die erste Vorrichtung zum Empfangen des Signals des drahtlosen Netzwerks auf den ersten Empfangsempfindlichkeitswert.

2. Verfahren nach Anspruch 1, wobei die Übertragungserfolgsrate von RTS-Schutzrahmen RTS_PER mit einem ersten oberen Begrenzungswert und einem ersten unteren Begrenzungswert korrespondiert und der CCA-Wert CCA_Cnt mit einem zweiten oberen Begrenzungswert und einem zweiten unteren Begrenzungswert korrespondiert, wobei Bestimmen des Empfindlichkeitsanpassungswerts korrespondierend mit dem Bereich von Erfolgsraten und dem Bereich von Bewertungswerten umfasst:
Bestimmen, dass der Empfindlichkeitsanpassungswert angibt, den gegenwärtigen Empfangsempfindlichkeitswert um einen Zielwert zu erhöhen, als Reaktion darauf, dass die Übertragungserfolgsrate von RTS-Schutzrahmen RTS_PER kleiner als der erste untere Begrenzungswert ist und der CCA-Wert CCA_Cnt größer als der zweite obere Begrenzungswert ist; und
Bestimmen, dass der Empfindlichkeitsanpassungswert angibt, den gegenwärtigen Empfangsempfindlichkeitswert um den Zielwert zu verringern, als Reaktion darauf, dass die Übertragungserfolgsrate von RTS-Schutzrahmen RTS_PER größer als der erste obere Begrenzungswert ist oder der CCA-Wert CCA_Cnt kleiner als der zweite untere Begrenzungswert ist.

3. Verfahren nach Anspruch 1 oder 2, wobei die Netzwerkparameter ferner eine minimale erste Empfangssignalstärkeangabe, RSSI, MinRssi unter einer Vielzahl von RSSIs korrespondierend mit der Vielzahl von zweiten Vorrichtungen, die gegenwärtig mit der ersten Vorrichtung verbunden sind, umfassen und das Verfahren ferner umfasst:
nach dem Bestimmen, gemäß den Netzwerkparametern, des ersten Empfangsempfindlichkeitswerts für die erste Vorrichtung zum Empfangen des Signals des drahtlosen Netzwerks
Aktualisieren des ersten Empfangsempfindlichkeitswerts auf einen kleineren einen der minimalen ersten RSSI und einer zweiten RSSI als Reaktion darauf, dass der erste Empfangsempfindlichkeitswert nicht kleiner als die minimale erste RSSI ist und der erste Empfangsempfindlichkeitswert nicht kleiner als die zweite RSSI ist, wobei die zweite RSSI eine minimale RSSI ist, nach der die erste Vorrichtung horchen kann.

4. Verfahren nach Anspruch 2, ferner umfassend:
Erlangen einer Vielzahl von Referenz-Übertragungserfolgsraten von RTS-Schutzrahmen unter einer Vielzahl von ersten Übertragungsraten;
Bestimmen, unter der Vielzahl von ersten Übertragungsraten, einer ersten Ziel-Übertragungsrate, die einer im Voraus bestimmten ersten Übertragungsrate am nächsten und größer als die im Voraus bestimmte erste Übertragungsrate ist, und Bestimmen, unter der Vielzahl von ersten Übertragungsraten, einer zweiten Ziel-Übertragungsrate, die einer im Voraus bestimmten zweiten Übertragungsrate am nächsten und kleiner als die im Voraus bestimmte zweite Übertragungsrate ist, wobei die im Voraus bestimmte zweite Übertragungsrate kleiner als die im Voraus bestimmte erste Übertragungsrate ist;
Bestimmen einer Referenz-Übertragungserfolgsrate korrespondierend mit der ersten Ziel-Übertragungsrate, der erste untere Begrenzungswert zu sein, und Bestimmen einer Referenz-Übertragungserfolgsrate korrespondierend mit der zweiten Ziel-Übertragungsrate, der erste obere Begrenzungswert zu sein;
Erlangen einer Vielzahl von Referenz-CCA-Werten unter einer Vielzahl von zweiten Übertragungsraten;
Bestimmen, unter der Vielzahl von zweiten Übertragungsraten, einer dritten Ziel-Übertragungsrate, die einer im Voraus bestimmten dritten Übertragungsrate am nächsten und größer als die im Voraus bestimmte dritte Übertragungsrate ist, und Bestimmen, unter der Vielzahl von zweiten Übertragungsraten, einer vierten Ziel-Übertragungsrate, die einer im Voraus bestimmten vierten Übertragungsrate am nächsten und kleiner als die im Voraus bestimmte vierte Übertragungsrate ist, wobei die im Voraus bestimmte vierte Übertragungsrate kleiner als die im Voraus bestimmte dritte Übertragungsrate ist; und
Bestimmen eines CCA-Werts korrespondierend mit der dritten Ziel-Übertragungsrate, der zweite untere Begrenzungswert zu sein, und Bestimmen eines CCA-Werts korrespondierend mit der vierten Ziel-Übertragungsrate, der zweite obere Begrenzungswert zu sein.

5. Verfahren nach Anspruch 1 oder 2, wobei Anpassen der Empfangsempfindlichkeit für die erste Vorrichtung zum Empfangen des Signals des drahtlosen Netzwerks auf den ersten Empfangsempfindlichkeitswert umfasst:
Bestimmen eines gegenwärtigen Modulationsmodus des Signals des drahtlosen Netzwerks der ersten Vorrichtung; und
Schreiben des ersten Empfangsempfindlichkeitswerts in ein Hardware-Register korrespondierend mit dem Modulationsmodus und Wirksammachen des ersten Empfangsempfindlichkeitswerts.

6. Verfahren nach Anspruch 5, wobei die Netzwerkparameter ferner eine minimale erste RSSI MinRssi unter einer Vielzahl von RSSIs korrespondierend mit der Vielzahl von zweiten Vorrichtungen, die gegenwärtig mit der ersten Vorrichtung verbunden sind, umfassen und das Verfahren ferner umfasst:
nach dem Bestimmen, gemäß den Netzwerkparametern, des ersten Empfangsempfindlichkeitswerts für die erste Vorrichtung zum Empfangen des Signals des drahtlosen Netzwerks
Aktualisieren des ersten Empfangsempfindlichkeitswerts auf einen kleineren einen der minimalen ersten RSSI und einer zweiten RSSI als Reaktion darauf, dass der erste Empfangsempfindlichkeitswert nicht kleiner als die minimale erste RSSI ist und der erste Empfangsempfindlichkeitswert nicht kleiner als die zweite RSSI ist, wobei die zweite RSSI eine minimale RSSI ist, nach der die erste Vorrichtung horchen kann.

7. Verfahren nach Anspruch 3, wobei Anpassen der Empfangsempfindlichkeit für die erste Vorrichtung zum Empfangen des Signals des drahtlosen Netzwerks auf den ersten Empfangsempfindlichkeitswert umfasst:
Bestimmen eines gegenwärtigen Modulationsmodus des Signals des drahtlosen Netzwerks der ersten Vorrichtung; und
Schreiben des ersten Empfangsempfindlichkeitswerts in ein Hardware-Register korrespondierend mit dem Modulationsmodus und Wirksammachen des ersten Empfangsempfindlichkeitswerts.

8. Verfahren nach Anspruch 4, wobei Anpassen der Empfangsempfindlichkeit für die erste Vorrichtung zum Empfangen des Signals des drahtlosen Netzwerks auf den ersten Empfangsempfindlichkeitswert umfasst:
Bestimmen eines gegenwärtigen Modulationsmodus des Signals des drahtlosen Netzwerks der ersten Vorrichtung; und
Schreiben des ersten Empfangsempfindlichkeitswerts in ein Hardware-Register korrespondierend mit dem Modulationsmodus und Wirksammachen des ersten Empfangsempfindlichkeitswerts.

9. Elektronische Vorrichtung, umfassend einen Prozessor (310), einen Speicher (320), eine Kommunikationsschnittstelle (330) und ein oder mehrere Programme (321), wobei das eine oder die mehreren Programme in dem Speicher gespeichert sind und konfiguriert sind, durch den Prozessor ausgeführt zu werden, und das eine oder die mehreren Programme Anweisungen zum Durchführen des Verfahrens nach einem der Ansprüche 1 bis 8 umfassen.

10. Computerlesbares Speichermedium, konfiguriert zum Speichern von Computerprogrammen für elektronischen Datenaustausch, die, wenn sie ausgeführt werden, mit einem Computer funktionsfähig sind, das Verfahren nach einem der Ansprüche 1 bis 8 durchzuführen.

## Revendications

1. Procédé de résolution d'interférence de canal WiFi, pour Wireless Fidelity, réalisé par un premier dispositif et comprenant :
l'obtention (101, 201) de paramètres de réseau du premier dispositif, le premier dispositif étant connecté à une pluralité de deuxièmes dispositifs à travers un réseau sans fil, les paramètres de réseau comprenant un taux de succès de transmission d'une trame de protection de demande pour émettre, notée RTS, notée RTS_PER, du premier dispositif, une valeur d'évaluation de canal libre, notée CCA, notée CCA_Cnt, et une valeur de trafic, notée Traffic_Value, d'un réseau de module de sous-système de station de base, noté BSS, dans lequel se trouve le premier dispositif ;
la détermination (102), selon les paramètres de réseau, d'une première valeur de sensibilité de réception pour permettre au premier dispositif de recevoir un signal de réseau sans fil, comprenant :
la détermination (202) si le taux de succès de transmission de la trame de protection de RTS, RTS_PER, s'inscrit ou non dans une plage de taux de succès, et si la valeur de CCA, CCA_Cnt, s'inscrit ou non dans une plage de valeurs d'évaluation, en réponse au fait que la valeur de trafic, Traffic_Value, est supérieure à un seuil de trafic ;
la détermination (203) d'une valeur de réglage de sensibilité correspondant à la plage de taux de succès et à la plage de valeurs d'évaluation, en réponse au fait que le taux de succès de transmission de la trame de protection de RTS, RTS_PER, s'inscrit dans la plage de taux de succès et que la valeur de CCA, CCA_Cnt, s'inscrit dans la plage de valeurs d'évaluation ;
l'obtention (204) d'un valeur de sensibilité de réception actuelle pour permettre au premier dispositif de recevoir le signal de réseau sans fil ; et
la détermination (205) de la première valeur de sensibilité de réception selon la valeur de sensibilité de réception actuelle et la valeur de réglage de sensibilité ; et
le réglage (103, 206) d'une sensibilité de réception pour permettre au premier dispositif de recevoir le signal de réseau sans fil sur la première valeur de sensibilité de réception.

2. Procédé selon la revendication 1, dans lequel le taux de succès de transmission de la trame de protection de RTS, RTS_PER, correspond à une première valeur limite supérieure et à une première valeur limite inférieure, et la valeur de CCA, CCA_Cnt, correspond à une deuxième valeur limite supérieure et à une deuxième valeur limite inférieure, la détermination de la valeur de réglage de sensibilité correspondant à la plage de taux de succès et à la plage de valeurs d'évaluation comprenant :
la détermination que la valeur de réglage de sensibilité indique une augmentation de la valeur de sensibilité de réception actuelle d'une valeur cible, en réponse au fait que le taux de succès de transmission de la trame de protection de RTS, RTS_PER, est inférieur à la première valeur limite inférieure et que la valeur de CCA, CCA_Cnt est supérieure à la deuxième valeur limite supérieure ; et
la détermination que la valeur de réglage de sensibilité indique une diminution de la valeur de sensibilité de réception actuelle de la valeur cible, en réponse au fait que le taux de succès de transmission de la trame de protection de RTS, RTS_PER, est supérieur à la première valeur limite supérieure ou que la valeur de CCA, CCA_Cnt est inférieure à la deuxième valeur limite inférieure.

3. Procédé selon la revendication 1 ou 2, dans lequel les paramètres de réseau comprennent en outre une première indication d'intensité de signal reçu, notée RSSI, minimale, notée MinRssi, parmi une pluralité de RSSI correspondant à la pluralité de deuxièmes dispositifs qui sont actuellement connectés au premier dispositif, et le procédé comprenant en outre :
après la détermination, selon les paramètres de réseau, de la première valeur de sensibilité de réception pour permettre au premier dispositif de recevoir le signal de réseau sans fil,
la mise à jour de la première valeur de sensibilité de réception à la plus petite valeur entre la première RSSI minimale et une deuxième RSSI, en réponse au fait que la première valeur de sensibilité de réception n'est pas inférieure à la première RSSI minimale et que la première valeur de sensibilité de réception n'est pas inférieure à la deuxième RSSI, la deuxième RSSI étant une RSSI minimale que le premier dispositif est capable de scruter.

4. Procédé selon la revendication 2, comprenant en outre :
l'obtention d'une pluralité de taux de succès de transmission de référence d'une trame de protection de RTS compte tenu d'une pluralité de premiers taux de transmission ;
la détermination, parmi la pluralité de premiers taux de transmission, d'un premier taux de transmission cible le plus proche d'un premier taux de transmission prédéterminé et supérieur au premier taux de transmission prédéterminé, et la détermination, parmi la pluralité de premiers taux de transmission, d'un deuxième taux de transmission cible le plus proche d'un deuxième taux de transmission prédéterminé et inférieur au deuxième taux de transmission prédéterminé, le deuxième taux de transmission prédéterminé étant inférieur au premier taux de transmission prédéterminé ;
la détermination d'un taux de succès de transmission de référence correspondant au premier taux de transmission cible comme étant la première valeur limite inférieure, et la détermination d'un taux de succès de transmission de référence correspondant au deuxième taux de transmission cible comme étant la première valeur limite supérieure ;
l'obtention d'une pluralité de valeurs de CCA de référence compte tenu d'une pluralité de deuxièmes taux de transmission ;
la détermination, parmi la pluralité de deuxièmes taux de transmission, d'un troisième taux de transmission cible le plus proche d'un troisième taux de transmission prédéterminé et supérieur au troisième taux de transmission prédéterminé, et la détermination, parmi la pluralité de deuxièmes taux de transmission, d'un quatrième taux de transmission cible le plus proche d'un quatrième taux de transmission prédéterminé et inférieur au quatrième taux de transmission prédéterminé, le quatrième taux de transmission prédéterminé étant inférieur au troisième taux de transmission prédéterminé ; et
la détermination d'une valeur de CCA correspondant au troisième taux de transmission cible comme étant la deuxième valeur limite inférieure, et la détermination d'une valeur de CCA correspondant au quatrième taux de transmission cible comme étant la deuxième valeur limite supérieure.

5. Procédé selon la revendication 1 ou 2, dans lequel le réglage de la sensibilité de réception pour permettre au premier dispositif de recevoir le signal de réseau sans fil sur la première valeur de sensibilité de réception comprend :
la détermination d'un mode de modulation actuel du signal de réseau sans fil du premier dispositif ; et
l'écriture de la première valeur de sensibilité de réception dans un registre matériel correspondant au mode de modulation, et la prise d'effet de la première valeur de sensibilité de réception.

6. Procédé selon la revendication 5, dans lequel les paramètres de réseau comprennent en outre une première RSSI minimale, MinRssi, parmi une pluralité de RSSI correspondant à la pluralité de deuxièmes dispositifs qui sont actuellement connectés au premier dispositif, et le procédé comprenant en outre :
après la détermination, selon les paramètres de réseau, de la première valeur de sensibilité de réception pour permettre au premier dispositif de recevoir le signal de réseau sans fil,
la mise à jour de la première valeur de sensibilité de réception à la plus petite valeur entre la première RSSI minimale et une deuxième RSSI, en réponse au fait que la première valeur de sensibilité de réception n'est pas inférieure à la première RSSI minimale et que la première valeur de sensibilité de réception n'est pas inférieure à la deuxième RSSI, la deuxième RSSI étant une RSSI minimale que le premier dispositif est capable de scruter.

7. Procédé selon la revendication 3, dans lequel le réglage de la sensibilité de réception pour permettre au premier dispositif de recevoir le signal de réseau sans fil sur la première valeur de sensibilité de réception comprend :
la détermination d'un mode de modulation actuel du signal de réseau sans fil du premier dispositif ; et
l'écriture de la première valeur de sensibilité de réception dans un registre matériel correspondant au mode de modulation, et la prise d'effet de la première valeur de sensibilité de réception.

8. Procédé selon la revendication 4, dans lequel le réglage de la sensibilité de réception pour permettre au premier dispositif de recevoir le signal de réseau sans fil sur la première valeur de sensibilité de réception comprend :
la détermination d'un mode de modulation actuel du signal de réseau sans fil du premier dispositif ; et
l'écriture de la première valeur de sensibilité de réception dans un registre matériel correspondant au mode de modulation, et la prise d'effet de la première valeur de sensibilité de réception.

9. Dispositif électronique, comprenant un processeur (310), une mémoire (320), une interface de communication (330), et un ou plusieurs programmes (321), les un ou plusieurs programmes étant stockés dans la mémoire et étant configurés pour être exécutés par le processeur, et les un ou plusieurs programmes comprenant des instructions pour réaliser le procédé selon l'une quelconque des revendications 1 à 8.

10. Support de stockage lisible par ordinateur configuré pour stocker des programmes d'ordinateur pour l'échange électronique de données qui, lorsqu'ils sont exécutés, sont exploitables au moyen d'un ordinateur pour réaliser le procédé selon l'une quelconque des revendications 1 à 8.
